# EUROPÄISCHE PATENTSCHRIFT

(11) **EP 1 951 416 B1**
(45) Veröffentlichungstag und Bekanntmachung des Hinweises auf die Patenterteilung: **28.10.2009**
(21) Anmeldenummer: 06818070.2
(22) Anmeldetag: 13.11.2006
(51) Int. Cl.: B01F 13/10, B01F 15/02, B01F 15/04, B01F 3/18, B01F 7/16, B29B 7/60

(54) **VORRICHTUNG ZUR HERSTELLUNG EINER MISCHUNG AUS VERSCHIEDENEN SCHÜTTGUTKOMPONENTEN**
APPARATUS FOR THE PRODUCTION OF A MIXTURE OF DIFFERENT BULK MATERIAL COMPONENTS
DISPOSITIF DE PREPARATION D'UN MELANGE A PARTIR DE DIFFERENTES COMPOSANTES DE MATIERE EN VRAC

(30) Priorität: 11.11.2005 DE 102005054253
(43) Veröffentlichungstag der Anmeldung: 06.08.2008
(73) Patentinhaber: INOEX GmbH, 32547 Bad Oeynhausen (DE)
(72) Erfinder: DETERS, Martin, 49143 Bissendorf (DE); SCHÄFER, Wolfgang, 32584 Löhne (DE)
(74) Vertreter: Seewald, Jürgen
(86) Internationale Anmeldenummer: PCT/DE2006/001981
(87) Internationale Veröffentlichungsnummer: WO 2007/054084

(56) Entgegenhaltungen:
- DE-A1- 2 034 837
- DE-A1- 19 939 042
- DE-A1-102004 053 921
- DE-U- 7 026 426
- US-A- 6 007 236

## Beschreibung

Die vorliegende Erfindung betrifft eine Vorrichtung zur Herstellung einer Mischung aus verschiedenen Schüttgutkomponenten gemäß dem Oberbegriff des Anspruchs 1.

Herkömmliche Chargenmischer weisen voneinander getrennte Wägebehälter und Mischbehälter auf, wobei eine im Wägebehälter befindliche Charge nach ihrem Abwiegen in den darunter angeordneten Mischbehälter entleert wird. Der Mischbehälter enthält motorisch angetriebene Mischorganen, die die Schüttgutkomponenten miteinander vermischen. Die fertige Mischung wird dann einer Weiterverarbeitung, z. B. in einem Extruder zugeführt. Nachteilig bei diesem Stand der Technik ist neben dem erhöhten apparativen Aufwand die Bauhöhe, die verhältnismäßig groß ist, da der Wägebehälter oberhalb des Mischbehälters angeordnet ist.

Bekannte Vorrichtungen schaffen hier Abhilfe, in dem die Mischeinrichtung in den Wägebehälter integriert ist, wie z. B. aus der EP 0 789 617 B1 und der DE 196 14 688 C2 bekannt ist. Ein separater Mischbehälter entfällt also bei dieser Lösung, was die Bauhöhe reduziert und den apparativen Aufwand senkt. Nachteilig bei diesen Lösungen ist, dass die Mischeinrichtung, hier insbesondere der Antriebsmotor zusammen mit dem Wägebehälter an der Wägeeinrichtung aufgehängt bzw. an dieser abgestützt ist. Dadurch wird das Verhältnis Leergewicht des Wägebehälters zur Einwaage negativ beeinflusst, woraus Messfehler resultieren. Ein weiterer Nachteil der bekannten Vorrichtungen gemäß DE 196 14 688 C2 und EP 0 789 617 B1 besteht darin, dass der Wägebehälter zum Mischen der in ihm befindlichen Charge in eine oszillierende oder pendelnde Bewegung versetzt werden muss, wodurch ebenfalls der apparative Aufwand erhöht wird.

In der DE 70 26 426 U ist eine gattungsgemäße Vorrichtung offenbart. Bei dieser Vorrichtung ragt die Mischeinrichtung von oben in den Wägebehälter hinein. Die Mischeinrichtung wird über einen Motor angetrieben, der von dem Wägebehälter gravimetrisch getrennt auf einem Gerüst der Vorrichtung gelagert ist. Die Verbindung zwischen dem Motor und der Mischvorrichtung erfolgt über eine Klauenkupplung. Während der Mischphase ist der Motor über die Klauenkupplung mit der Mischeinrichtung verbunden, während die Klauen der Klauenkupplung in der Abwägephase eine kraft- und berührungsfreie Position einnehmen. In der Abwägephase ist also die Mischeinrichtung vom Motor gravimetrisch getrennt.

Diese Vorrichtung hat gegenüber den anderen bekannten Vorrichtungen den Vorteil, dass die Antriebseinheit der Mischeinrichtung nicht mitgewogen wird, wodurch das Verhältnis des Leergewichts des Wägebehälters zur Einwage im Sinne einer Erhöhung der Messgenauigkeit verbessert ist.

Ergänzund wird noch auf die DE 2034837 A1 hingewiesen.

Aufgabe der vorliegenden Erfindung ist es, eine gattungsgemäße Vorrichtung zur Verfügung zu stellen, bei der das Verhältnis des Leergewichts des Wägebehälters zur Einwaage im Sinne einer Erhöhung der Messgenauigkeit noch weiter verbessert ist.

Diese Aufgabe wird erfindungsgemäß mit einer Vorrichtung gelöst, die die Merkmale des Anspruchs 1 aufweist.

Bei der erfindungsgemäßen Vorrichtung sind also der Wägebehälter und die in ihn integrierte Mischeinrichtung gravimetrisch voneinander getrennt, in dem die von oben in den Wägebehälter hineinragende Mischeinrichtung separat vom Wägebehälter aufgehängt ist und damit von der Wägeeinrichtung nicht erfasst wird. Das Verhältnis Leergewicht des Wägebehälters zur Einwaage ist damit gegenüber dem Stand der Technik wesentlich kleiner, wodurch eine Erhöhung der Messgenauigkeit erreicht wird.

Weitere vorteilhafte Ausgestaltungen der Erfindung ergeben sich aus den Unteransprüchen. Die Erfindung wird nachstehend anhand eines Ausführungsbeispiels näher erläutert. In der dazugehörigen Zeichnung zeigt:
- Fig. 1: eine schematische Seitenansicht einer erfindungsgemäßen Vorrichtung,

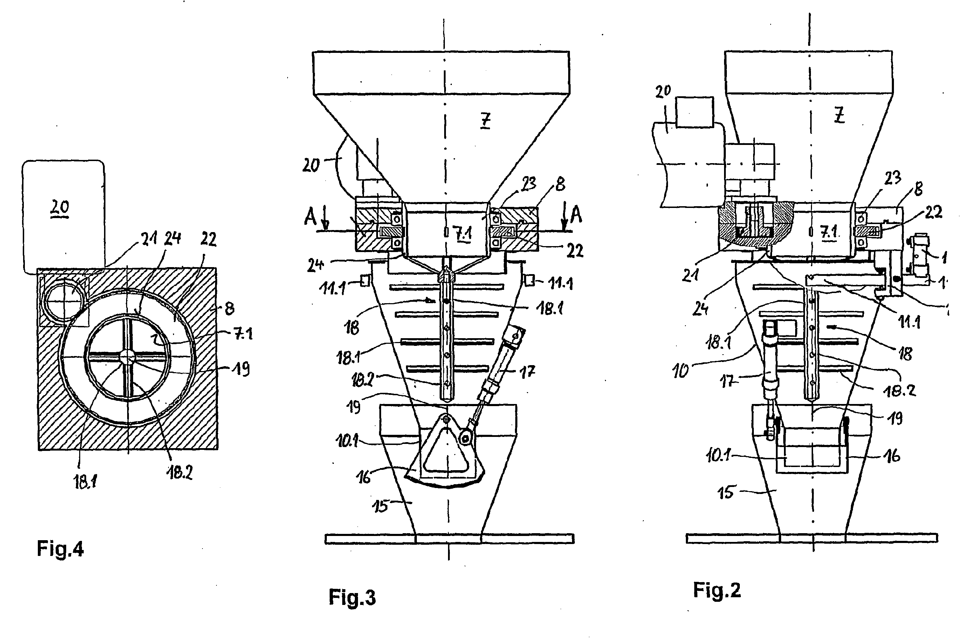

- Fig. 2: eine Einzeldarstellung des Wägebehälters der Vorrichtung gemäß Fig. 1 mit der integrierten Mischeinrichtung und den Ein- und Auslauftrichtern,
- Fig. 3: eine Vorderansicht der Darstellung gemäß Fig. 2, und
- Fig. 4: einen Schnitt A-A gemäß Fig. 3.

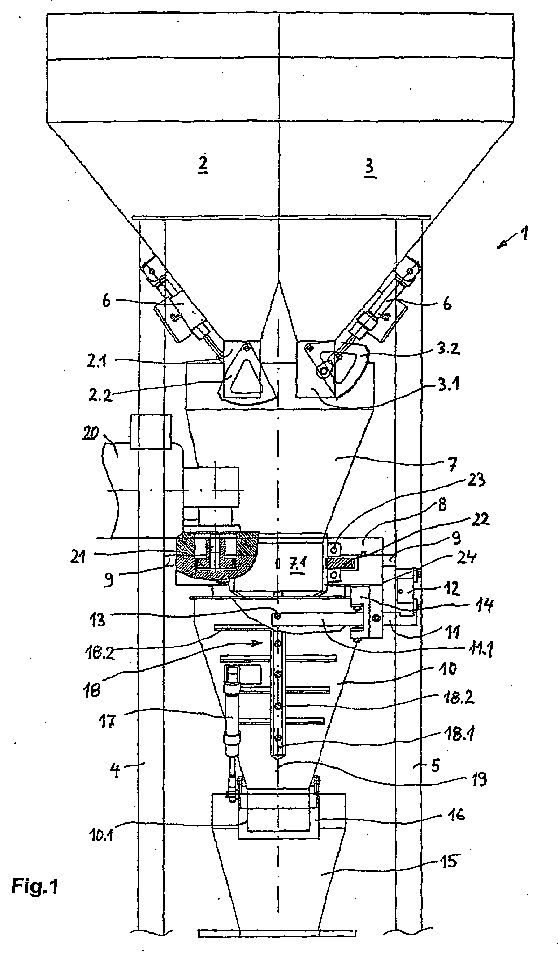

Die in Fig. 1 dargestellte Gesamtansicht einer erfindungsgemäßen Vorrichtung 1 zeigt zwei Vorratsbehälter 2 und 3 für jeweils eine Schüttgutkomponente, die über mehrere Stützen eines Gerüstes, von denen in Fig. 1 nur die Stützen 4 und 5 sichtbar sind, aufgeständert sind. Je nach Anzahl der zu mischenden Schüttgutkomponenten können noch weitere Vorratsbehälter, bezogen auf die Darstellung gemäß Fig. 1 hinter den Vorratsbehältern 2 und 3 angeordnet sein. Um ein Ausfließen der Schüttgutkomponenten aus den Vorratsbehältern 2 und 3 unter Schwerkraftwirkung zu erleichtern, sind deren Wände zumindest im Bereich ihrer Auslässe 2.1 und 3.1 trichterförmig ausgeführt. Die Auslässe 2.1 und 3.1 sind als Rohrstutzen ausgeführt, die an ihrem Ende durch eine schaufelartige Bodenklappe 2.2 bzw. 3.2 verschließbar sind. Die Bodenklappen 2.2 und 3.2 sind durch Kolbenzylindereinheiten 6, die z. B. pneumatisch betrieben werden, betätigbar. Die Kolbenzylindereinheiten 6 sind jeweils an einer Wand der Vorratsbehälter 2 und 3 befestigt.

Die Auslässe 2.1 und 3.1 der Vorratsbehälter 2 und 3 münden in einen oben offenen Einlauftrichter 7, der sich an seinem unteren Ende auf einer Plattform 8 abstützt. Diese Plattform 8 ist über nur symbolisch dargestellte seitliche Streben 9 starr mit den Stützen 4 und 5 und weiteren, nicht dargestellten Stützen des Gerüsts der Vorrichtung 1 verbunden. Der Auslass 7.1 des Einlauftrichters 7 ist ebenfalls wieder als Rohrstutzen ausgebildet, der die Plattform 8 nach unten durchragt.

Der Auslass 7.1 des Einlauftrichters 7 mündet in einen oben offenen Wägebehälter 10, der trichterförmig ausgebildet ist, also sich von oben nach unten verjüngt. Der Wägebehälter 10 ist in bekannter Weise über eine Gabel 11 an einem Biegestab 12 aufgehängt, der seinerseits am Gerüst der Vorrichtung 1 gelagert ist. Die Gabelarme 11.1 umgreifen den Wägebehälter 10 an seinem Umfang, der dort in Höhe seiner Mittelachse 19 seitlich abragende Bolzen 13 aufweist, mit denen er in entsprechende, nach oben offene Aussparungen der Gabelarme 11.1 eingehängt ist. Die Gabelarme 11.1 sind in einem Überlastschutz 14 geführt, der eine übermäßige Belastung des Biegestabs 12 verhindern soll.

Der als Rohrstutzen 10.1 ausgebildete Auslass des Wägebehälters 10 ragt frei in einen Auslauftrichter 15 hinein, der sich seinerseits auf einer nicht dargestellten Verarbeitungsmaschine, z. B. einen Extruder oder aber auf einer Fördereinrichtung abstützt, die die fertige Mischung einer Verarbeitungsmaschine zuführt. Der Auslass 10.1 des Wägebehälters 10 ist, wie die Vorratsbehälter 2 und 3, ebenfalls durch eine schaufelartige Bodenplatte 16 verschließbar, die durch eine an einer Wand des Wägebehälters 10 befestigte Kolbenzylindereinheit 17 betätigbar ist.

Die starr mit dem Gerüst der Vorrichtung 1 verbundene Plattform 8 trägt eine Mischeinrichtung 18, die aus einer Mischwelle 17.1 und von dieser radial abragenden Mischarmen 18.2 besteht, deren Länge in Anpassung an die Wandung des Wägebehälters 10 von oben nach unten abnimmt. Im eingebauten Zustand ragt die Mischeinrichtung 18 von oben in den Wägebehälter 10 hinein, wobei ihre Mischwelle 18.1 auf der Mittelachse 19 des Wägebehälters 10 liegt.

Der Antrieb der Mischeinrichtung 18 erfolgt über einen Elektromotor 20, der auf der Plattform 8 gelagert ist. Auf der Motorwelle sitzt drehfest ein Ritzel 21, welches mit einem Zahnkranz 22 kämmt, der in Kugellagern 23 in der Plattform 8 gelagert ist, und drehfest mit einem Hohlzylinderabschnitt 24 verbunden ist, der den Auslass 7.1 des Einlauftrichters 7 konzentrisch umgibt und sich frei um diesen drehen kann. Die Mischwelle 18.1 der Mischeinrichtung 18 ist über Haltearme 25 drehfest mit dem Hohlzylinderabschnitt 24 verbunden.

Bei der oben beschriebenen Anordnung hängt die Mischeinrichtung 18 an der Plattform 8, die auch den gesamten Antrieb der Mischeinrichtung 18, also den Elektromotor 20, sowie die Getriebemittel, Ritzel 21 und Zahnkranz 22, trägt. Diese Bauteile belasten daher den Biegebalken 12 nicht, so dass über diesen neben der Einwaage nur das Leergewicht des Wägebehälters 10, der Zylinderkolbeneinheit 17 und der Bodenklappe 16 erfasst wird. Toträume werden durch die Anordnung der Mischeinrichtung 18 vermieden, da diese axial von oben in den Wägebehälter 10 hineinragt. Aufgrund der Trichterform des Wägebehälters 10, der gleichzeitig Mischbehälter ist, ist ein rückstandsfreier Abfluss der gemischten Charge nach dem Öffnen der Bodenklappe 16 in den Auslauftrichter 15 gewährleistet. Die erfindungsgemäße Anordnung sorgt auch für eine leichte Zugänglichkeit zur Mischeinrichtung 18, indem der Wägebehälter 10 einfach aus den Gabelarmen 11.1 ausgehängt werden kann.

## Patentansprüche

1. Vorrichtung zur Herstellung einer Mischung aus verschiedenen Schüttgutkomponenten, mit Vorratsbehältern für die einzelnen Schüttgutkomponenten und einem Wägebehälter mit integrierter Mischeinrichtung, der an einer Wägeeinrichtung aufgehängt oder abgestützt ist und dem die gewünschte Mischung der Schüttgutkomponenten aus den Vorratsbehältern durch Fördereinrichtungen über einen oberen Einlass zugeführt wird, wobei die Mischeinrichtung von oben in den Wägebehälter hineinragt und Motor-Getriebe-Mittel für den Antrieb der Mischeinrichtung gravimetrisch vom Wägebehälter getrennt an einem Gerüst der Vorrichtung gelagert sind, **dadurch gekennzeichnet, dass** die Mischeinrichtung (18) frei von dem Wägebehälter (10) permanent an den Motor-Getriebe-Mitteln (20, 21, 22) aufgehängt ist.

2. Vorrichtung nach Anspruch 1, **dadurch gekennzeichnet, dass** die Mischeinrichtung (18) starr an einem Hohlzylinderabschnitt (24) aufgehängt ist, der einen Rohreinlaufstutzen (7.1) für die Schüttgutkomponenten in den Wägebehälter (10) konzentrisch umgibt und frei um diesen drehbar ist, wobei der Hohlzylinderabschnitt (24) drehantreibbar in einer Plattform (8) gelagert ist, die unabhängig vom Wägebehälter (10) am Gerüst der Vorrichtung (1) befestigt ist.

3. Vorrichtung nach Anspruch 2, **dadurch gekennzeichnet, dass** die Plattform (8) auch die Motor-Getriebe-Mittel (20, 21, 22) für den Antrieb der Mischeinrichtung (18) trägt.

4. Vorrichtung nach Anspruch 3, **dadurch gekennzeichnet, dass** der Hohlzylinderabschnitt (24) an seinem Umfang drehfest mit einem Zahnkranz (22) verbunden ist, der mit einem Ritzel (21) der Motorwelle kämmt.

5. Vorrichtung nach einem der vorhergehenden Ansprüche, **dadurch gekennzeichnet, dass** der Wägebehälter über eine Gabel (11) an einem Biegestab (12) aufgehängt ist, der am Gerüst der Vorrichtung (1) gelagert ist.

## Claims

1. Device for manufacturing a mixture from various bulk material components, with storage receptacles for the individual bulk material components and a weighing receptacle which has an integrated mixing apparatus and is suspended from, or supported on, a weighing apparatus and to which the desired mixture of the bulk material components is fed from the storage receptacles by conveying apparatuses via an upper inlet, wherein the mixing apparatus projects into the weighing receptacle from above and motor/transmission means for driving the mixing apparatus are mounted, in a manner gravimetrically separate from the weighing receptacle, on a frame of the device,
**characterised in that** the mixing apparatus (18) is permanently suspended from the motor/transmission means (20, 21, 22) in a manner free from the weighing receptacle (10).

2. Device according to claim 1,
**characterised in that** the mixing apparatus (18) is suspended rigidly from a hollow-cylindrical section. (24) which concentrically surrounds a tubular run-in spout (7.1) for the bulk material components into the weighing receptacle (10) and can be rotated freely about the latter, the hollow-cylindrical section (24) being mounted, so as to be capable of being driven in rotation, in a platform (8) which is fastened to the frame of the device (1) independently of the weighing receptacle (10).

3. Device according to claim 2,
**characterised in that** the platform (8) also carries the motor/transmission means (20, 21, 22) for driving the mixing apparatus (18).

4. Device according to claim 3,
**characterised in that**, at its periphery, the hollow-cylindrical section (24) is connected in a rotation-proof manner to a toothed ring (22) which meshes with a pinion (21) on the motor shaft.

5. Device according to one of the preceding claims,
**characterised in that** the weighing receptacle is suspended, via a fork (11), from a bending bar (12) which is mounted on the frame of the device (1).

## Revendications

1. Dispositif de fabrication d'un mélange de différents composants d'un produit en vrac avec des réservoirs de stockage pour les différents composants du produit en vrac et un récipient de pesage à dispositif mélangeur intégré, qui est suspendu à ou supporté par un appareil de pesage et auquel le mélange souhaité des composants du produit en vrac est amené depuis les réservoirs de stockage, via une entrée supérieure, par des moyens de convoyage, le dispositif mélangeur faisant saillie depuis le haut dans le récipient de pesage et des moyens d'engrenage motorisés pour l'entraînement du dispositif mélangeur étant logés de manière séparée gravimétriquement du récipient de pesage sur une ossature du dispositif, **caractérisé en ce que** le dispositif mélangeur (18) est suspendu aux moyens d'engrenage motorisés (20, 21, 22) de façon permanente et libre par rapport au récipient de pesage (10).

2. Dispositif suivant la revendication 1, **caractérisé en ce que** le dispositif mélangeur (1B) est suspendu de façon rigide à une section cylindrique creuse (24), qui entoure de façon concentrique un embout de tuyau d'alimentation (7.1) débouchant dans le récipient de pesage (10) pour les composants du produit en vrac et qui peut pivoter librement autour de celui-ci, la section cylindrique creuse (24) étant logée de manière à pouvoir être entraînée en rotation dans une plate-forme (8), qui est fixée de façon indépendante du récipient de pesage (10) sur l'ossature du dispositif (1).

3. Dispositif suivant la revendication 2, **caractérisé en ce que** la plate-forme (8) porte également les moyens d'engrenage motorisés (20, 21, 22) pour l'entraînement du dispositif mélangeur (18).

4. Dispositif suivant la revendication 3, **caractérisé en ce que** la section cylindrique creuse (24) est, au niveau de sa circonférence, reliée de manière résistante à la torsion à une couronne dentée (22) s'engrenant avec un pignon (21) de l'arbre du moteur.

5. Dispositif suivant une des revendications précédentes, **caractérisé en ce que** le récipient de pesage est suspendu par l'intermédiaire d'une fourche (11) à une barre soumise à la flexion (12), qui est logée sur l'ossature du dispositif (1).
